(19) Europäisches Patentamt / European Patent Office / Office européen des brevets

(11) **EP 4 213 479 A1**

(12) **EUROPEAN PATENT APPLICATION**
published in accordance with Art. 153(4) EPC

(43) Date of publication:
**19.07.2023 Bulletin 2023/29**

(21) Application number: **21868334.0**

(22) Date of filing: **06.08.2021**

(51) International Patent Classification (IPC):
**H04N 5/369** (2011.01)  **G06T 5/00** (2006.01)

(86) International application number:
**PCT/CN2021/111189**

(87) International publication number:
**WO 2022/057506 (24.03.2022 Gazette 2022/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.09.2020 CN 202010973121**

(71) Applicant: **GUANGDONG OPPO MOBILE
TELECOMMUNICATIONS
CORP., LTD.
Dongguan, Guangdong 523860 (CN)**

(72) Inventor: **LIU, Jun
Dongguan, Guangdong 523860 (CN)**

(74) Representative: **Manitz Finsterwald
Patent- und Rechtsanwaltspartnerschaft mbB
Martin-Greif-Strasse 1
80336 München (DE)**

(54) **IMAGE SENSOR, TERMINAL, DATA PROCESSING METHOD AND APPARATUS, AND STORAGE MEDIUM**

(57)    Provided are an image sensor, a terminal, a data processing method and apparatus, and a storage medium, which relate to the technical field of image collection. The image sensor comprises multiple pixel units, wherein the multiple pixel units comprise: a first pixel unit sensitive to a red spectral region; a second pixel unit sensitive to a green spectral region; a third pixel unit sensitive to a first blue spectral region; and a fourth pixel unit sensitive to a second blue spectral region. By means of the present disclosure, the deviation of a blue channel of an image sensor from blue cone cells of a human eye is reduced, and the color accuracy of a blue region is thus improved.

FIG. 5

## Description

The present disclosure claims priority of Chinese Patent Application No. 202010973121.X, in the title of "IMAGE SENSOR, TERMINAL, DATA PROCESSING METHOD, APPARATUS, AND STORAGE MEDIUM", filed on September 16, 2020, in the China National Intellectual Property Administration, the entire contents of which are hereby incorporated by reference in their entirety.

## TECHNICAL FIELD

The present disclosure relates to the field of electronic device technologies, and in particular to an image sensor, a terminal, a data processing method, an apparatus, and a storage medium.

## BACKGROUND

Image sensors are devices that convert optical images into electrical signals, developed based on optoelectronic technology.

In the related art, the pixel array of the image sensor is designed by Bayer Pattern. The Bayer Pattern includes red/green/blue (RGB) photoreceptor sub-pixels. The Bayer Pattern is formed by repeating a 2*2 array unit that includes one R-sensitive subpixel, one B-sensitive subpixel, and two G-sensitive subpixels, with the R-sensitive subpixel sensing red light, the B-sensitive subpixel sensing blue light, and the G-sensitive subpixel sensing green light.

## SUMMARY OF THE DISCLOSURE

The present disclosure provides an image sensor, a terminal, a data processing method, an apparatus, and a storage medium.

In an aspect, the present disclosure provides a n image sensor, including a plurality of pixel units: wherein the plurality of pixel units include;

a first pixel unit sensitive to a red spectral region;
a second pixel unit sensitive to a green spectral region;
a third pixel unit sensitive to a first blue spectral region; and
a fourth pixel unit sensitive to a second blue spectrum region.

In another aspect, the present disclosure provides a terminal, including the image sensor as above.

In further another aspect, the present disclosure provides a data processing method, including:

obtaining a spectrum of a first reflected light that enters an image sensor after an ambient light irradiates an object by reflection; wherein the image sensor includes a plurality of pixel units, the plurality of pixel units including: a first pixel unit sensitive to a red spectral region; a second pixel unit sensitive to a green spectral region; a third pixel unit sensitive to a first blue spectral region; and a fourth pixel unit sensitive to a second blue spectrum region;
determining a first red component perceived by the first pixel unit according to a sum of a product of the spectrum of the first reflected light and a spectral transmittance of the first pixel unit at a corresponding wavelength;
determining a first green component perceived by the second pixel unit according to a sum of a product of the spectrum of the first reflected light and a spectral transmittance of the second pixel unit at a corresponding wavelength;
determining a first blue component perceived by the third pixel unit according to a sum of a product of the spectrum of the first reflected light and a spectral transmittance of the third pixel unit at a corresponding wavelength;
determining a second blue component perceived by the fourth pixel unit according to a sum of a product of the spectrum of the first reflected light and a spectral transmittance of the fourth pixel unit at a corresponding wavelength; and
determining a red-green-blue response of the human eye according to a color conversion relationship and the first red component, the first green component, the first blue component, and the second blue component.

In further another aspect, the present disclosure provides a data processing apparatus, including:

a spectrum obtaining module, configured to obtain a spectrum of a first reflected light that enters an image sensor after an ambient light irradiates an object by reflection; wherein the image sensor includes a plurality of pixel units, the plurality of pixel units including: a first pixel unit sensitive to a red spectral region; a second pixel unit sensitive to a green spectral region; a third pixel unit sensitive to a first blue spectral region; and a fourth pixel unit sensitive to a second blue spectrum region;
a component determination module, configured to:

determine a first red component perceived by the first pixel unit according to a sum of a product of the spectrum of the first reflected light and a spectral transmittance of the first pixel unit at a corresponding wavelength;
determine a first green component perceived by the second pixel unit according to a sum of a product of the spectrum of the first reflected light and a spectral transmittance of the second pixel unit at a corresponding wavelength;
determine a first blue component perceived by the third pixel unit according to a sum of a product of the spectrum of the first reflected light and a spectral transmittance of the third pixel unit at a corresponding wavelength; and
determine a second blue component perceived by the fourth pixel unit according to a sum of a product of the spectrum of the first reflected light and a spectral transmittance of the fourth pixel unit at a corresponding wavelength; and
a response determination module, configured to determine a red-green-blue response of the human eye according to a color conversion relationship and the first red component, the first green component, the first blue component, and the second blue component.

In further another aspect, the present disclosure provides a computer-readable storage medium, storing a computer program; wherein the computer program is configured to be loaded and executed by a processor to perform the data processing method as above.

In further another aspect, the present disclosure provides a computer program product, the computer program product including computer instructions, the computer instructions being stored in a computer-readable storage medium. A processor of a computer device reads the computer instructions from the computer-readable storage medium, and the processor executes the computer instructions such that the computer device performs the data processing method as above.

## BRIEF DESCRIPTION OF THE DRAWINGS

FIG. 1 is a schematic view of spectral response of a red channel of an image sensor in the related art and red cone cells of the human eye in the red band.
FIG. 2 is a schematic view of spectral response of a green channel of an image sensor in the related art and green cone cells of the human eye in the green band.
FIG. 3 is a schematic view of spectral response of a blue channel of an image sensor in the related art and blue cone cells of the human eye in the blue band.
FIG. 4 is a schematic view of a MacAdam ellipse in the related art.
FIG. 5 is a schematic view of an image sensor according to an embodiment of the present disclosure.
FIG. 6 is a schematic view of spectral response of two blue channels according to an embodiment of the present disclosure and blue cone cells of the human eye.
FIG. 7 is a schematic view of a color filter array according to an embodiment of the present disclosure.
FIG. 8 is a flowchart of a data processing method according to an embodiment of the present disclosure.
FIG. 9 is a block view of a data processing apparatus according to an embodiment of the present disclosure.

## DETAILED DESCRIPTION

To make the purpose, technical solutions, and advantages of the present disclosure clearer, the following will be described in further detail in conjunction with the accompanying drawings for the implementation of the present disclosure.

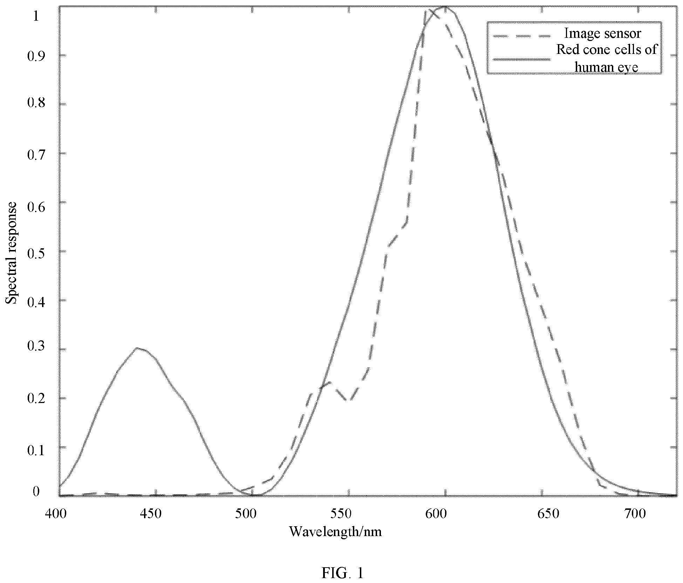

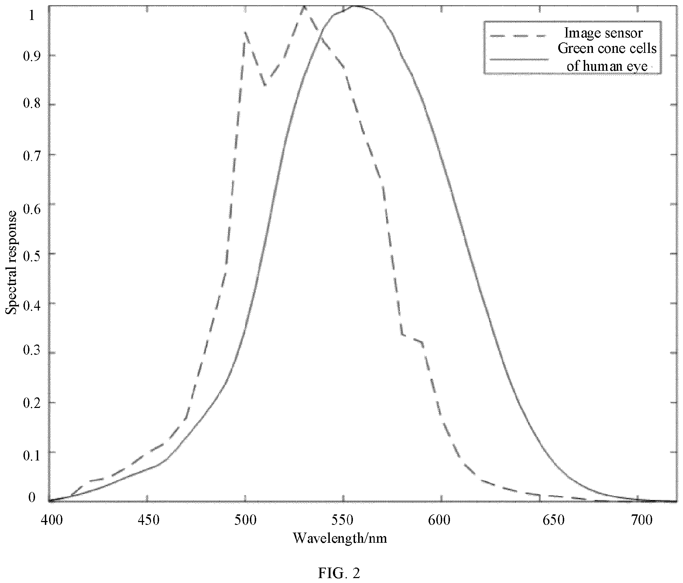

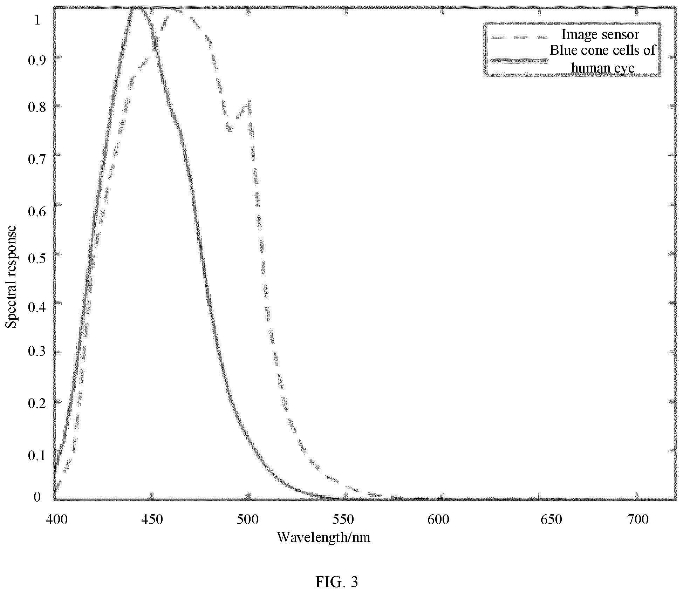

There are three types of cone cells in the human retina that are sensitive to long, medium, and short wavelengths, i.e., to red, green, and blue light, respectively. As shown in FIG. 1, it illustrates the spectral response of the red channel of an image sensor and the red cone cells of the human eye in the red band (red spectral region); as shown in FIG. 2, it illustrates the spectral response of the green channel of the image sensor and the green cone cells of the human eye in the green band (green spectral region); as shown in FIG. 3, it illustrates the spectral response of the blue channel of the image sensor and the blue cone cells of the human eye in the blue band (blue spectral region). It should be noted that the spectral response of the human eye cone cells in different bands in FIGS. 1, 2, and 3 above uses the Commission Internationale de l'Eclairage (CIE) 1931 tri-stimulus value XYZ, and the above spectral response is for a 2-degree viewing angle. For other viewing angles, it is necessary to use the CIE other three-stimulus response. The red channel of the image sensor in the related art has basically no response at short wavelengths (450nm~500nm), while the corresponding CIE 1931 tri-stimulus value X response exists, which can usually be compensated by the response of the blue channel of the sensor.

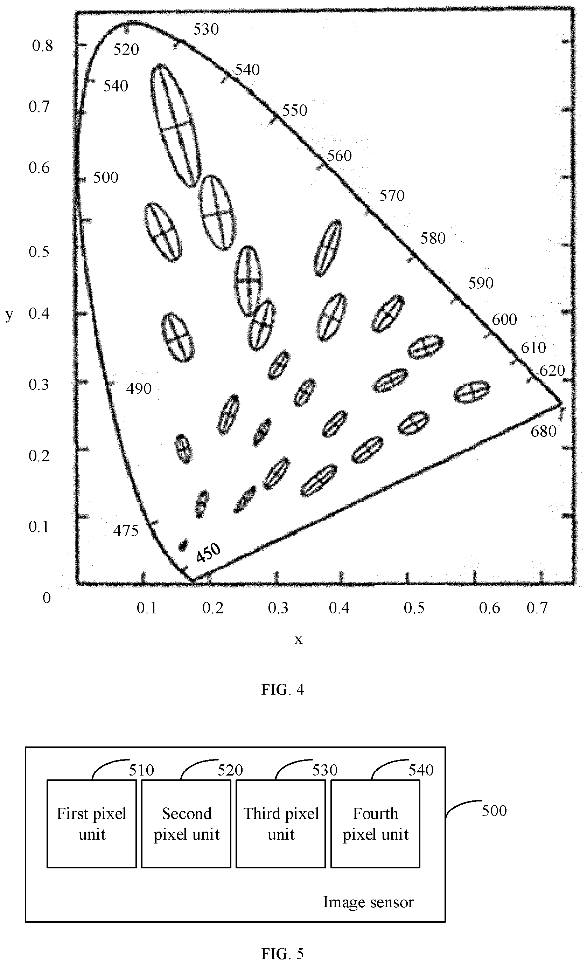

As can be seen in FIGS. 1, 2, and 3, the spectral response of all three RGB channels of the sensor differs from the spectral response of the human eye cone cells (standard spectral response). Since the response of the blue channel of the blue cone cells of the human eye is narrow, this difference leads to a greater deviation of the final response of the blue channel of the image sensor from the response of the blue cone cells of the human eye, and this color difference is more easily perceived after processing by the brain. FIG. 4 shows a diagram of a MacAdam ellipse with a just noticeable color difference between the center and the edge of the ellipse in xy color space (it should be noted that the size of the ellipse has been enlarged by a factor of ten for illustration purposes). As can be seen from FIG. 4, the ellipse size in the blue-violet region of the lower left corner of the McAdam ellipse is significantly smaller than that in other regions of the McAdam ellipse. Therefore, the human eye is more sensitive to the blue-violet region, and a small color difference can be detected. The equations for x and y are shown below.

$$\begin{cases} x = \dfrac{X}{X + Y + Z} \\ y = \dfrac{Y}{X + Y + Z} \end{cases}$$

Therefore, the spectral response corresponding to the blue channel of the image sensor has a significant impact on the final color accuracy. To improve the color accuracy of the blue region, two blue spectral regions are introduced in the present embodiments, a first blue spectral region and a second blue spectral region, respectively. The present disclosure implements two blue spectral regions through the image sensor, which reduces the deviation of the blue channel of the image sensor from the blue cone cells of the human eye, thereby enhancing the color accuracy of the blue region.

Referring to FIG. 5, FIG. 5 is a schematic view of an image sensor according to an embodiment of the present disclosure. The image sensor 500 includes multiple pixel units, the multiple pixel units including: a first pixel unit 510 sensitive to the red spectral region; a second pixel unit 520 sensitive to the green spectral region; a third pixel unit 530 sensitive to the first blue spectral region, and a fourth pixel unit 540 sensitive to the second blue spectrum region.

The image sensor 500 is a device for capturing an image, and the image sensor 500 can convert a light signal to an electrical signal. The red spectral region is configured to characterize spectral properties of red light, the green spectral region is configured to characterize spectral properties of green light, and the first blue spectral region and the second blue spectral region are configured to characterize spectral properties of blue light.

In some embodiments, the first blue spectral region and the second blue spectral region are two different blue spectral regions, and the standard blue spectral region overlaps with the first blue spectral region and the second blue spectral region, respectively.

In some embodiments, the first blue spectral region is disposed in a long wavelength region of the standard blue spectral region, and the second blue spectral region is disposed in a low wavelength region of the standard blue spectral region.

In some embodiments, the first blue spectral region includes the 440 nm to 480 nm band and the second blue spectral region includes the 400 nm to 440 nm band.

In some embodiments, there is an overlapping band between the first blue spectral region and the second blue spectral region that is part of the spectral response band corresponding to the blue cone cells of the human eye (i.e., the standard blue spectral region). The spectral response refers to the capability of the image sensor 500 to respond to different wavelengths of light, usually represented by spectral curves, and the spectral response indicates the capability of photons of different wavelengths to produce electron-hole pairs. The human eye cone cell, a type of retinal cell, is disposed within the retina and is also called a photoreceptor due to its capability of receiving light stimuli and converting light energy into nerve impulses. The standard blue spectral region has the overlapping band with a first band in the first blue spectral region and a second band in the second blue spectral region.

In the first band and second band, the spectral response corresponding to the third pixel unit and the spectral response corresponding to the fourth pixel unit can precisely represent the spectral response corresponding to the blue cone cells of the human eye.

In some embodiments, the response band of the spectral response corresponding to the third pixel unit further includes a third band, and the response band of the spectral response corresponding to the fourth pixel unit further includes a fourth band. The third band is larger than the response band of the spectral response corresponding to the blue cone cells of the human eye; the fourth band is smaller than the response band of the spectral response corresponding to the blue cone cells of the human eye.

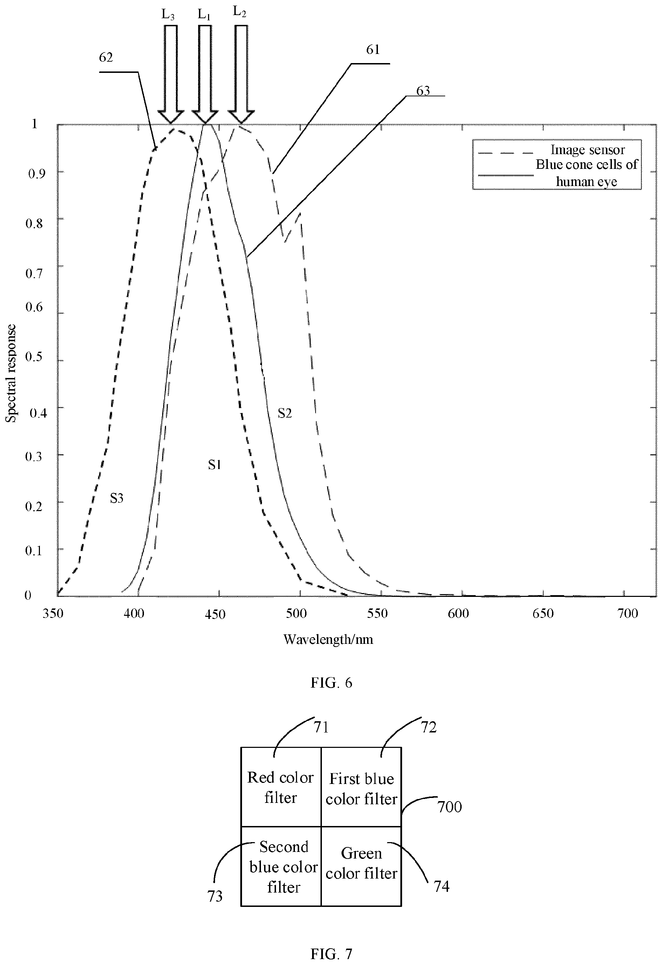

As shown in FIG. 6, FIG. 6 is a schematic view of spectral response of two blue channels according to an embodiment of the present disclosure and blue cone cells of the human eye. The spectral response curve 61 corresponding to the third pixel unit and the spectral response curve 62 corresponding to the fourth pixel unit have an overlap region (S1 region). The spectral response curve 63 corresponding to the blue cone cell of the human eye has an overlap with the spectral response curve 61 corresponding to the third pixel unit and the spectral response curve 62 corresponding to the fourth pixel unit in the S1 region. The third band of the spectral response curve 61 of the third pixel unit is shifted toward the long wavelength direction (S2 region); the fourth band of the spectral response curve 62 of the fourth pixel unit is shifted toward the short wavelength direction (S3 region).

Exemplarily, the spectral response corresponding to the blue cone cells of the human eye can be inferred from the spectral response corresponding to the third pixel unit and the spectral response corresponding to the fourth pixel unit. For example, the spectral response corresponding to the fourth pixel unit contains the blue band as well as the longer blue-green band. The spectral response corresponding to the third pixel unit and the spectral response corresponding to the fourth pixel unit induced by the light stimulation shown in $L_1$ can precisely represent the spectral response corresponding to the blue cone cells of the human eye; when the ratio of the spectral response corresponding to the fourth pixel unit to the spectral response corresponding to the third pixel unit increases, the spectral response corresponding to the third pixel unit and the spectral response corresponding to the fourth pixel unit induced by the light stimulation shown in $L_2$ deviate from the sensitive blue band of the blue cone cells of the human eye, indicating that the actual spectral response corresponding to the blue cone cells of the human eye is smaller than the spectral response corresponding to the fourth pixel unit, and the spectral response corresponding to the fourth pixel unit is required to be corrected to predict the true spectral response corresponding to the blue cone cells of the human eye. When the ratio of the spectral response corresponding to the fourth pixel unit to the spectral response corresponding to the third pixel unit decreases, the spectral response corresponding to the third pixel unit and the spectral response corresponding to the fourth pixel unit induced by the light stimulation shown in $L_3$ come from the sensitive blue band of the blue cone cells of the human eye; and in this case, the spectral response corresponding to the fourth pixel unit can still represent the spectral response corresponding to the blue cone cells of the human eye.

In summary, the technical solution provided in the present disclosure may improve the color accuracy of the blue region by introducing two different blue spectral regions to reduce the deviation of the blue channel of the image sensor from the blue cone cells of the human eye.

In some embodiments, the pixel unit includes a light sensor and a color filter.

Exemplarily, a front side of the light sensor is arranged with m color filter arrays, and each color filter array includes n*n color filters. In the n*n color filters, the number of red color filters, the number of green color filters, the number of the first blue color filters, and the number of the second blue color filters are the same. m is a positive integer, and n is an integer greater than or equal to 2. In the present disclosure, "greater than or equal to" can be understood as greater than or equal to. As shown in FIG. 7, FIG. 7 is a schematic view of a color filter array according to an embodiment of the present disclosure. The color filter array 700 includes 2*2 color filters, for example, the upper left corner of which is a red color filter 71, the upper right corner is a first blue color filter 72, the lower left corner is a second blue color filter 73, and the lower right corner is a green color filter 74. The arrangement of the red color filter, green color filter, first blue color filter, and second blue color filter in the color filter array is not limited.

The light sensor is a device that converts an optical image into an electrical signal developed based on optoelectronic technology and is divided into a vacuum tube light sensor and a semiconductor light sensor. A solid-state light sensor is a highly integrated semiconductor optoelectronic device, which can complete the conversion, transmission, and processing of the optoelectronic signal alone. The core of the solid-state optical sensor is a charge-transfer device, including at least one of: a charge coupled device (CCD) and a complementary metal oxide semiconductor (CMOS).

CCD is composed of metal oxide semiconductor (MOS) capacitors arranged in arrays on a substrate material with the function of photogenerated charge, accumulation, and transfer. CCD can convert an optical signal into an electrical pulse signal. Each pulse reflects the light exposure of a photosensitive element, the pulse amplitude reflects the intensity of the light exposure of the photosensitive element, and the order of the output pulses reflects the position of the photosensitive element. In addition to the functional unit of CCD chip, CMOS chip further includes a control circuit, an analog/digit (A/D) conversion and video signal processing circuit, which can perform brightness, contrast, noise control, edge detection and other complex processing.

In some embodiments, the color filter includes a first color filter, a second color filter, a third color filter and a fourth color filter.

The first color filter is configured to filter all light signals other than the red spectral region, such that only light signals associated with the red spectral region are passed.

The second color filter is configured to filter all light signals other than the green spectral region, such that only light signals associated with the green spectral region are passed.

The third color filter is configured to filter all light signals other than the first blue spectral region, such that only light signals associated with the first blue spectral region are passed.

The fourth color filter is configured to filter all light signals other than the second blue spectral region, such that only light signals associated with the second blue spectral region are passed.

It should be noted that the first color filter has the same meaning as the red color filter, the second color filter has the same meaning as the green color filter, the third color filter has the same meaning as the first blue color filter, and the fourth color filter has the same meaning as the second blue color filter.

In some embodiments, the light sensor includes a first light sensor, a second light sensor, a third light sensor, and a fourth light sensor.

The first light sensor and a first color filter are configured to form a predetermined first color channel, such that only the light signal associated with the red spectral region is passed.

The second light sensor and a second color filter are configured to form a predetermined second color channel, such that only the light signal associated with the green spectral region is passed.

The third light sensor and a third color filter are configured to form a predetermined third color channel, such that only the light signal associated with the first blue spectral region is passed.

The fourth light sensor and a fourth color filter are configured to form a predetermined fourth color channel, such that only the light signal associated with the second blue spectral region is passed.

In the image capturing process, a first image is obtained under the first color filter, a second image is obtained under the second color filter, a third image is obtained under the third color filter, and a fourth image is obtained under the fourth color filter. Then the above first image, second image, third image, and fourth image are processed to obtain a final image.

In some embodiments, the present disclosure further provides a terminal, which includes the image sensor as described in the above embodiments. Exemplarily, the terminal refers to a terminal having an image capture function, for example, the terminal includes a mobile phone, a tablet computer, a personal computer (PC), a smart wearable device, a smart multimedia device, a camera, etc. The present disclosure embodiment is not limited to the type of the terminal.

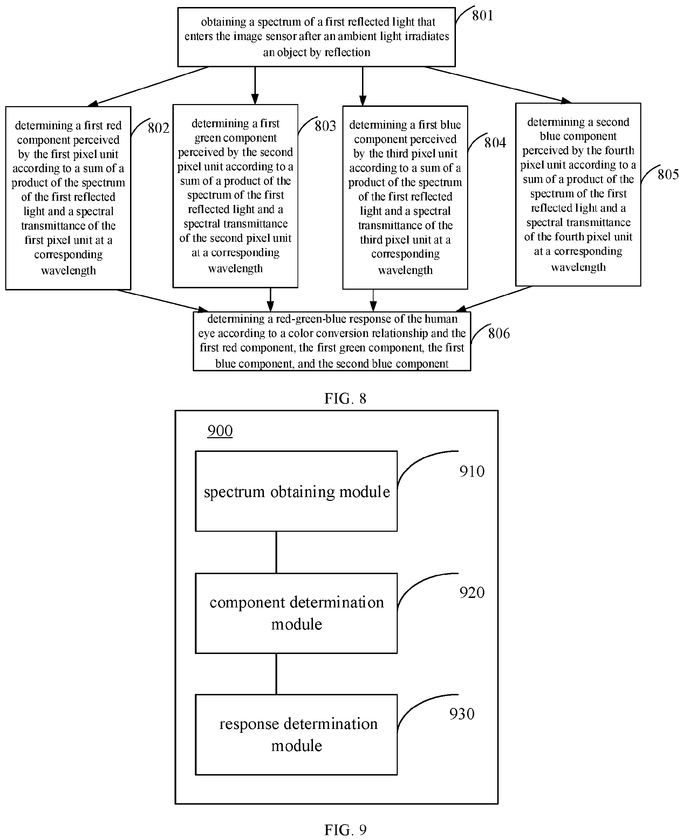

Referring to FIG. 8, FIG. 8 is a flowchart of a data processing method according to an embodiment of the present disclosure. The method may include operations at blocks illustrated herein.

At block 801: obtaining a spectrum of a first reflected light that enters the image sensor after an ambient light irradiates an object by reflection.

In the present embodiments, the image sensor includes multiple pixel units, and the multiple pixel units include: a first pixel unit sensitive to the red spectral region, a second pixel unit sensitive to the green spectral region, a third pixel unit sensitive to the first blue spectral region, and a fourth pixel unit sensitive to the second blue spectral region.

The description of the image sensor can be found in the above embodiments and will not be repeated herein.

At block 802: determining a first red component perceived by the first pixel unit according to a sum of a product of the spectrum of the first reflected light and a spectral transmittance of the first pixel unit at a corresponding wavelength.

In some embodiments, the first red component R is determined by the following equation.

$$R = \sum \phi(\lambda)\overline{r}(\lambda)\Delta\lambda \cdot$$

Where, $\overline{r}(\lambda)$ indicates the spectral transmittance of the first pixel unit, and $\phi(\lambda)$ indicates the spectrum of the first reflected light.

At block 803: determining a first green component perceived by the second pixel unit according to a sum of a product of the spectrum of the first reflected light and a spectral transmittance of the second pixel unit at a corresponding wavelength.

In some embodiments, the first green component G is determined by the following equation.

$$G = \sum \phi(\lambda)\overline{g}(\lambda)\Delta\lambda \cdot$$

Where $\overline{g}(\lambda)$ indicates the spectral transmittance of the second pixel unit and $\phi(\lambda)$ indicates the spectrum of the first reflected light.

At block 804: determining a first blue component perceived by the third pixel unit according to a sum of a product of the spectrum of the first reflected light and a spectral transmittance of the third pixel unit at a corresponding wavelength.

In some embodiments, the first blue component B1 is determined by the following equation.

$$B_1 = \sum \phi(\lambda)\overline{b}_1(\lambda)\Delta\lambda .$$

Where, $\overline{b}_1(\lambda)$ indicates the spectral transmittance of the third pixel unit and $\phi(\lambda)$ indicates the spectrum of the first reflected light.

At block 805: determining a second blue component perceived by the fourth pixel unit according to a sum of a product of the spectrum of the first reflected light and a spectral transmittance of the fourth pixel unit at a corresponding wavelength.

In some embodiments, the second blue component B2 is determined by the following equation.

$$B_2 = \sum \phi(\lambda)\overline{b}_2(\lambda)\Delta\lambda .$$

Where $\overline{b}_2(\lambda)$ indicates the spectral transmittance of the fourth pixel unit and $\phi(\lambda)$ indicates the spectrum of the first reflected light.

It should be noted that steps 802 to 805 can be executed simultaneously or in some order, and the present disclosure does not limit the order of execution of steps 802 to 805.

At block 806: determining a red-green-blue response of the human eye according to a color conversion relationship and the first red component, the first green component, the first blue component, and the second blue component.

In some embodiments, the color conversion relationship is a color conversion matrix. The first red component is denoted as R, the first green component is denoted as G, the first blue component is denoted as B1, the second blue component is denoted as B2 , and the red-green-blue response of the human eye can be expressed as the CIE 1931 tri-stimulus value XYZ. In this case, XYZ can be obtained by determining the following equation.

$$\begin{bmatrix} X \\ Y \\ Z \end{bmatrix} = \begin{bmatrix} a_{11} & a_{12} & a_{13} & a_{14} \\ a_{21} & a_{22} & a_{23} & a_{24} \\ a_{31} & a_{32} & a_{33} & a_{34} \end{bmatrix} \begin{bmatrix} R \\ G \\ B_1 \\ B_2 \end{bmatrix} .$$

The implementation subject of the present disclosure may be a terminal or may be an image sensor included in the terminal. In some embodiments, the terminal further includes an image signal processing (ISP), and the image sensor determines the red-green-blue response of the human eye and sends the red-green-blue response to the ISP to cause the ISP to process the red-green-blue response to obtain a final color image.

In summary, the technical solution provided in the present disclosure may improve the color accuracy of the blue region by introducing two different blue spectral regions to reduce the deviation of the blue channel of the image sensor from the blue cone cells of the human eye.

In some embodiments, the color conversion relationship is required to be determined before the terminal can determine the red-green-blue response of the human eye according to the color conversion relationship and the red component, green component, first blue component, and second blue component, and the color conversion relationship can be determined by the following.

First, a spectrum of a second reflected light that enters the image sensor after a standard light source irradiates a color card by reflection is obtained.

In some embodiments, the color card is an Aicolor 24-color card. The standard light source is D50 light source, the color temperature of D50 light source is 5000K, which is recognized by the world printing industry as the standard color temperature ICC (International Color Consortium) standard, and its condition is exactly similar to the daytime sunlight with more normal color.

Second, a second red component perceived by the first pixel unit is determined according to a sum of a product of the spectrum of the second reflected light and a spectral transmittance of the first pixel unit at a corresponding wavelength.

Since the second red component is determined in a similar manner as the first red component, the determination of the second red component can be referred to the introductory description above and will not be repeated here.

Third, a second green component perceived by the second pixel unit is determined according to a sum of a product of the spectrum of the second reflected light and a spectral transmittance of the second pixel unit at a corresponding wavelength.

Since the second green component is determined in a similar manner as the first green component, the determination of the second green component can be referred to the introductory description above and will not be repeated here.

Fourth, a third blue component perceived by the third pixel unit is determined according to a sum of a product of the spectrum of the second reflected light and a spectral transmittance of the third pixel unit at a corresponding wavelength.

Since the third blue component is determined in a manner similar as the first blue component, the determination of the third blue component can be referred to the introductory description above and will not be repeated here.

Fifth, a fourth blue component perceived by the fourth pixel unit is determined according to a sum of a product of the spectrum of the second reflected light and a spectral transmittance of the fourth pixel unit at a corresponding wavelength.

Since the fourth blue component is determined in a manner similar as the second blue component; the determination of the fourth blue component can be referred to the introductory description above and will not be repeated here.

Sixth, the color conversion relationship is determined according to the second red component, the second green component, the third blue component, the fourth blue component, and a standard red-green-blue response corresponding to the color card.

The reflectance spectra of the Aicolor 24-color card under D50 light source are simulated. Table 1 shows the response of the CIE 1931 tristimulus values under simulated calculation by the 24-color card, the effect of the CIE tristimulus values under the RGB conversion simulation, and the effect of the CIE tristimulus values under the $RGB_1B_2$ conversion simulation. DZ indicates the absolute difference between the Z values of the RGB or $RGB_1B_2$ simulation and the standard CIE 1931 Z value. As shown in Table 1, the mean DZ value of the $RGB_1B_2$ channel combination is smaller than that of the RGB combination, indicating that the present disclosure can improve the accuracy of the blue-violet region.

Table 1

| Color Card Name | CIE 1931 tristimulus value | | | CIE tristimulus values under RGB conversion simulation | | | | CIE tristimulus values under $RGB_1B_2$ conversion simulation | | | |
|---|---|---|---|---|---|---|---|---|---|---|---|
| | X | Y | Z | X | Y | Z | DZ | X | Y | Z | DZ |
| dark skin | 0.118 | 0.103 | 0.051 | 0.122 | 0.101 | 0.054 | 0.003 | 0.124 | 0.104 | 0.053 | 0.002 |
| light skin | 0.395 | 0.354 | 0.195 | 0.428 | 0.361 | 0.208 | 0.014 | 0.438 | 0.372 | 0.191 | 0.004 |
| blue sky | 0.170 | 0.185 | 0.262 | 0.173 | 0.189 | 0.277 | 0.015 | 0.172 | 0.184 | 0.266 | 0.004 |
| foliage | 0.109 | 0.133 | 0.053 | 0.108 | 0.138 | 0.057 | 0.004 | 0.111 | 0.139 | 0.051 | 0.003 |
| blue flower | 0.245 | 0.233 | 0.333 | 0.252 | 0.236 | 0.354 | 0.021 | 0.251 | 0.231 | 0.342 | 0.009 |
| bluish green | 0.305 | 0.418 | 0.346 | 0.296 | 0.423 | 0.378 | 0.032 | 0.303 | 0.423 | 0.361 | 0.015 |
| orange | 0.402 | 0.310 | 0.048 | 0.426 | 0.298 | 0.051 | 0.003 | 0.433 | 0.309 | 0.046 | 0.001 |
| purplish blue | 0.123 | 0.114 | 0.290 | 0.126 | 0.116 | 0.316 | 0.026 | 0.120 | 0.105 | 0.303 | 0.013 |
| moderate red | 0.302 | 0.199 | 0.103 | 0.368 | 0.223 | 0.107 | 0.005 | 0.377 | 0.234 | 0.106 | 0.004 |
| purple | 0.083 | 0.064 | 0.104 | 0.084 | 0.065 | 0.100 | 0.003 | 0.084 | 0.064 | 0.101 | 0.002 |
| yellow green | 0.354 | 0.444 | 0.090 | 0.339 | 0.442 | 0.095 | 0.006 | 0.350 | 0.450 | 0.090 | 0.000 |
| orange yellow | 0.488 | 0.436 | 0.060 | 0.502 | 0.422 | 0.064 | 0.004 | 0.508 | 0.431 | 0.061 | 0.001 |
| blue | 0.069 | 0.057 | 0.214 | 0.075 | 0.058 | 0.244 | 0.030 | 0.068 | 0.049 | 0.233 | 0.020 |

(continued)

| Color Card Name | CIE 1931 tristimulus value | | | CIE tristimulus values under RGB conversion simulation | | | | CIE tristimulus values under RGB₁B₂ conversion simulation | | | |
|---|---|---|---|---|---|---|---|---|---|---|---|
| | X | Y | Z | X | Y | Z | DZ | X | Y | Z | DZ |
| green | 0.149 | 0.230 | 0.077 | 0.140 | 0.235 | 0.081 | 0.004 | 0.148 | 0.240 | 0.073 | 0.005 |
| red | 0.220 | 0.126 | 0.038 | 0.276 | 0.152 | 0.039 | 0.002 | 0.288 | 0.164 | 0.050 | 0.012 |
| yellow | 0.602 | 0.607 | 0.074 | 0.616 | 0.602 | 0.078 | 0.004 | 0.630 | 0.618 | 0.070 | 0.004 |
| magenta | 0.309 | 0.200 | 0.231 | 0.357 | 0.221 | 0.232 | 0.001 | 0.364 | 0.227 | 0.233 | 0.002 |
| cyan | 0.134 | 0.189 | 0.301 | 0.140 | 0.200 | 0.337 | 0.036 | 0.142 | 0.196 | 0.321 | 0.021 |
| white | 0.874 | 0.909 | 0.724 | 0.894 | 0.909 | 0.774 | 0.050 | 0.902 | 0.910 | 0.744 | 0.021 |
| neutrals | 0.561 | 0.585 | 0.480 | 0.573 | 0.585 | 0.511 | 0.030 | 0.578 | 0.584 | 0.490 | 0.010 |
| neutral6.5 | 0.343 | 0.357 | 0.295 | 0.350 | 0.357 | 0.313 | 0.018 | 0.353 | 0.357 | 0.301 | 0.006 |
| neutral5 | 0.183 | 0.191 | 0.159 | 0.187 | 0.191 | 0.168 | 0.010 | 0.188 | 0.191 | 0.162 | 0.003 |
| neutral3.5 | 0.085 | 0.088 | 0.074 | 0.086 | 0.088 | 0.078 | 0.004 | 0.087 | 0.088 | 0.075 | 0.001 |
| black | 0.031 | 0.032 | 0.027 | 0.031 | 0.032 | 0.028 | 0.001 | 0.032 | 0.032 | 0.027 | 0.000 |

The following is apparatus embodiments of the present disclosure, which can be configured to perform the method in the above embodiments of the present disclosure. For details not disclosed in the apparatus embodiments of the present disclosure, reference may be made to the method embodiments of the present disclosure.

Referring to FIG. 9, FIG. 9 is a block view of a data processing apparatus according to an embodiment of the present disclosure. The apparatus has functions to implement the above method, and the functions may be implemented by hardware, or by hardware executing corresponding software. The apparatus 900 may include: a spectrum obtaining module 910, a component determination module 920, and a response determination module 930.

The spectrum obtaining module 910 is configured to obtain a spectrum of a first reflected light that enters the image sensor after an ambient light irradiates an object by reflection. The image sensor includes multiple pixel units, the multiple pixel units including: a first pixel unit sensitive to a red spectral region, a second pixel unit sensitive to a green spectral region, a third pixel unit sensitive to a first blue spectral region, and a fourth pixel unit sensitive to a second blue spectral region.

The component determination module 920 is configured to determine a first red component perceived by the first pixel unit according to a sum of a product of the spectrum of the first reflected light and a spectral transmittance of the first pixel unit at a corresponding wavelength.

The component determination module 920 is further configured to determine a first green component perceived by the second pixel unit according to a sum of a product of the spectrum of the first reflected light and a spectral transmittance of the second pixel unit at a corresponding wavelength.

The component determination module 920 is further configured to determine a first blue component perceived by the third pixel unit according to a sum of a product of the spectrum of the first reflected light and a spectral transmittance of the third pixel unit at a corresponding wavelength.

The component determination module 920 is further configured to determine a second blue component perceived by the fourth pixel unit according to a sum of a product of the spectrum of the first reflected light and a spectral transmittance of the fourth pixel unit at a corresponding wavelength.

The response determination module 930 is configured to determine a red-green-blue response of the human eye according to a color conversion relationship and the first red component, the first green component, the first blue component, and the second blue component.

In summary, the technical solution provided in the present disclosure may improve the color accuracy of the blue region by introducing two different blue spectral regions to reduce the deviation of the blue channel of the image sensor from the blue cone cells of the human eye.

In some embodiments, the apparatus 900 further includes: a relationship determination module (not shown).

The relationship determination module is configured to perform the following.

Obtaining a spectrum of a second reflected light that enters the image sensor after a standard light source irradiates a color card by reflection.

Determining a second red component perceived by the first pixel unit according to a sum of a product of the spectrum of the second reflected light and a spectral transmittance of the first pixel unit at a corresponding wavelength.

Determining a second green component perceived by the second pixel unit according to a sum of a product of the spectrum of the second reflected light and a spectral transmittance of the second pixel unit at a corresponding wavelength.

Determining a third blue component perceived by the third pixel unit according to a sum of a product of the spectrum of the second reflected light and a spectral transmittance of the third pixel unit at a corresponding wavelength.

Determining a fourth blue component perceived by the fourth pixel unit according to a sum of a product of the spectrum of the second reflected light and a spectral transmittance of the fourth pixel unit at a corresponding wavelength.

Determining the color conversion relationship according to the second red component, the second green component, the third blue component, the fourth blue component, and a standard red-green-blue response corresponding to the color card.

It should be noted that the apparatus provided by the above embodiments is only illustrated by the division of the above-mentioned functional modules in realizing its functions. In practice, the above-mentioned functions may be assigned by different functional modules according to needs, i.e., the internal structure of the apparatus is divided into different functional modules to accomplish all or part of the above-described functions. In addition, the apparatus provided by the embodiments belongs to the same idea as the method embodiments, and its specific implementation process is detailed in the method embodiments, which will not be repeated here.

In exemplary embodiments, the present disclosure further provides a computer-readable storage medium, the computer-readable storage medium having a computer program stored therein, the computer program being loaded and executed by a processor of a computer device to implement the steps in the data processing method as described above.

In exemplary embodiments, the present disclosure further provides a computer program product, the computer program product including computer instructions, the computer instructions being stored in a computer-readable storage medium. A processor of a computer device reads the computer instructions from the computer-readable storage medium, and the processor executes the computer instructions such that the computer device performs the data processing method as described above.

The above is only exemplary embodiments of the present disclosure and is not intended to limit the present disclosure. Any modification, equivalent substitution, improvement, etc. made within the spirit and principles of the present disclosure shall be included in the scope of the present disclosure.

**Claims**

1. An image sensor, **characterized by** comprising a plurality of pixel units; wherein the plurality of pixel units comprise;

    a first pixel unit sensitive to a red spectral region;
    a second pixel unit sensitive to a green spectral region;
    a third pixel unit sensitive to a first blue spectral region; and
    a fourth pixel unit sensitive to a second blue spectrum region.

2. The image sensor according to claim 1, wherein each pixel unit comprises a light sensor and a color filter.

3. The image sensor according to claim 2, wherein the color filter comprises a first color filter, a second color filter, a third color filter and a fourth color filter;

    the first color filter is configured to filter all light signals other than the red spectral region, such that only light signals associated with the red spectral region are passed;
    the second color filter is configured to filter all light signals other than the green spectral region, such that only light signals associated with the green spectral region are passed;
    the third color filter is configured to filter all light signals other than the first blue spectral region, such that only light signals associated with the first blue spectral region are passed;
    the fourth color filter is configured to filter all light signals other than the second blue spectral region, such that only light signals associated with the second blue spectral region are passed.

4. The image sensor according to claim 3, wherein the light sensor comprises a first light sensor, a second light sensor, a third light sensor, and a fourth light sensor;

the first light sensor and the first color filter are configured to form a predetermined first color channel, such that only the light signals associated with the red spectral region are passed;

the second light sensor and the second color filter are configured to form a predetermined second color channel, such that only the light signals associated with the green spectral region are passed;

the third light sensor and the third color filter are configured to form a predetermined third color channel, such that only the light signals associated with the first blue spectral region are passed;

the fourth light sensor and the fourth color filter are configured to form a predetermined fourth color channel, such that only the light signals associated with the second blue spectral region are passed.

5. The image sensor according to any one of claims 1-4, wherein the first blue spectral region and the second blue spectral region are different blue spectral regions; a standard blue spectral region has an overlapped region with the first blue spectral region and another overlapped region with the second blue spectral region.

6. The image sensor according to claim 5, wherein the first blue spectral region is disposed in a long wavelength region of the standard blue spectral region, and the second blue spectral region is disposed in a low wavelength region of the standard blue spectral region.

7. The image sensor according to claim 6, wherein the first blue spectral region comprises a 440 nm to 480 nm band and the second blue spectral region comprises a 400 nm to 440 nm band.

8. A terminal, comprising the image sensor according to any one of claims 1-7.

9. A data processing method, comprising:

obtaining a spectrum of a first reflected light that enters an image sensor after an ambient light irradiates an object by reflection; wherein the image sensor comprises a plurality of pixel units, the plurality of pixel units comprising: a first pixel unit sensitive to a red spectral region; a second pixel unit sensitive to a green spectral region; a third pixel unit sensitive to a first blue spectral region; and a fourth pixel unit sensitive to a second blue spectrum region;

determining a first red component perceived by the first pixel unit according to a sum of a product of the spectrum of the first reflected light and a spectral transmittance of the first pixel unit at a corresponding wavelength;

determining a first green component perceived by the second pixel unit according to a sum of a product of the spectrum of the first reflected light and a spectral transmittance of the second pixel unit at a corresponding wavelength;

determining a first blue component perceived by the third pixel unit according to a sum of a product of the spectrum of the first reflected light and a spectral transmittance of the third pixel unit at a corresponding wavelength;

determining a second blue component perceived by the fourth pixel unit according to a sum of a product of the spectrum of the first reflected light and a spectral transmittance of the fourth pixel unit at a corresponding wavelength; and

determining a red-green-blue response of the human eye according to a color conversion relationship and the first red component, the first green component, the first blue component, and the second blue component.

10. The data processing method according to claim 9, before the determining a red-green-blue response of the human eye according to a color conversion relationship and the first red component, the first green component, the first blue component, and the second blue component, further comprising:

obtaining a spectrum of a second reflected light that enters the image sensor after a standard light source irradiates a color card by reflection;

determining a second red component perceived by the first pixel unit according to a sum of a product of the spectrum of the second reflected light and a spectral transmittance of the first pixel unit at a corresponding wavelength;

determining a second green component perceived by the second pixel unit according to a sum of a product of the spectrum of the second reflected light and a spectral transmittance of the second pixel unit at a corresponding wavelength;

determining a third blue component perceived by the third pixel unit according to a sum of a product of the spectrum of the second reflected light and a spectral transmittance of the third pixel unit at a corresponding wavelength;

determining a fourth blue component perceived by the fourth pixel unit according to a sum of a product of the spectrum of the second reflected light and a spectral transmittance of the fourth pixel unit at a corresponding wavelength; and

determining the color conversion relationship according to the second red component, the second green component, the third blue component, the fourth blue component, and a standard red-green-blue response corresponding to the color card.

11. The data processing method according to claim 9, wherein each pixel unit comprises a light sensor and a color filter.

12. The data processing method according to claim 11, wherein the color filter comprises a first color filter, a second color filter, a third color filter and a fourth color filter;

the first color filter is configured to filter all light signals other than the red spectral region, such that only light signals associated with the red spectral region are passed;
the second color filter is configured to filter all light signals other than the green spectral region, such that only light signals associated with the green spectral region are passed;
the third color filter is configured to filter all light signals other than the first blue spectral region, such that only light signals associated with the first blue spectral region are passed;
the fourth color filter is configured to filter all light signals other than the second blue spectral region, such that only light signals associated with the second blue spectral region are passed.

13. The data processing method according to claim 12, wherein the light sensor comprises a first light sensor, a second light sensor, a third light sensor, and a fourth light sensor;

the first light sensor and the first color filter are configured to form a predetermined first color channel, such that only the light signals associated with the red spectral region are passed;
the second light sensor and the second color filter are configured to form a predetermined second color channel, such that only the light signals associated with the green spectral region are passed;
the third light sensor and the third color filter are configured to form a predetermined third color channel, such that only the light signals associated with the first blue spectral region are passed;
the fourth light sensor and the fourth color filter are configured to form a predetermined fourth color channel, such that only the light signals associated with the second blue spectral region are passed.

14. The data processing method according to any one of claims 9-13, wherein the first blue spectral region and the second blue spectral region are different blue spectral regions; a standard blue spectral region has an overlapped region with the first blue spectral region and another overlapped region with the second blue spectral region.

15. The data processing method according to claim 14, wherein the first blue spectral region is disposed in a long wavelength region of the standard blue spectral region, and the second blue spectral region is disposed in a low wavelength region of the standard blue spectral region.

16. The data processing method according to claim 15, wherein the first blue spectral region comprises a 440 nm to 480 nm band and the second blue spectral region comprises a 400 nm to 440 nm band.

17. A data processing apparatus, comprising:

a spectrum obtaining module, configured to obtain a spectrum of a first reflected light that enters an image sensor after an ambient light irradiates an object by reflection; wherein the image sensor comprises a plurality of pixel units, the plurality of pixel units comprising: a first pixel unit sensitive to a red spectral region; a second pixel unit sensitive to a green spectral region; a third pixel unit sensitive to a first blue spectral region; and a fourth pixel unit sensitive to a second blue spectrum region;
a component determination module, configured to:

determine a first red component perceived by the first pixel unit according to a sum of a product of the spectrum of the first reflected light and a spectral transmittance of the first pixel unit at a corresponding wavelength;
determine a first green component perceived by the second pixel unit according to a sum of a product of the spectrum of the first reflected light and a spectral transmittance of the second pixel unit at a corresponding wavelength;

determine a first blue component perceived by the third pixel unit according to a sum of a product of the spectrum of the first reflected light and a spectral transmittance of the third pixel unit at a corresponding wavelength; and

determine a second blue component perceived by the fourth pixel unit according to a sum of a product of the spectrum of the first reflected light and a spectral transmittance of the fourth pixel unit at a corresponding wavelength; and

a response determination module, configured to determine a red-green-blue response of the human eye according to a color conversion relationship and the first red component, the first green component, the first blue component, and the second blue component.

18. The data processing apparatus according to claim 17, further comprising a relationship determination module, configured to perform:

obtaining a spectrum of a second reflected light that enters the image sensor after a standard light source irradiates a color card by reflection;

determining a second red component perceived by the first pixel unit according to a sum of a product of the spectrum of the second reflected light and a spectral transmittance of the first pixel unit at a corresponding wavelength;

determining a second green component perceived by the second pixel unit according to a sum of a product of the spectrum of the second reflected light and a spectral transmittance of the second pixel unit at a corresponding wavelength;

determining a third blue component perceived by the third pixel unit according to a sum of a product of the spectrum of the second reflected light and a spectral transmittance of the third pixel unit at a corresponding wavelength;

determining a fourth blue component perceived by the fourth pixel unit according to a sum of a product of the spectrum of the second reflected light and a spectral transmittance of the fourth pixel unit at a corresponding wavelength; and

determining the color conversion relationship according to the second red component, the second green component, the third blue component, the fourth blue component, and a standard red-green-blue response corresponding to the color card.

19. The data processing apparatus according to claim 17, wherein each pixel unit comprises a light sensor and a color filter.

20. The data processing apparatus according to claim 19, wherein the color filter comprises a first color filter, a second color filter, a third color filter and a fourth color filter;

the first color filter is configured to filter all light signals other than the red spectral region, such that only light signals associated with the red spectral region are passed;

the second color filter is configured to filter all light signals other than the green spectral region, such that only light signals associated with the green spectral region are passed;

the third color filter is configured to filter all light signals other than the first blue spectral region, such that only light signals associated with the first blue spectral region are passed;

the fourth color filter is configured to filter all light signals other than the second blue spectral region, such that only light signals associated with the second blue spectral region are passed.

21. The data processing apparatus according to claim 20, wherein the light sensor comprises a first light sensor, a second light sensor, a third light sensor, and a fourth light sensor;

the first light sensor and the first color filter are configured to form a predetermined first color channel, such that only the light signals associated with the red spectral region are passed;

the second light sensor and the second color filter are configured to form a predetermined second color channel, such that only the light signals associated with the green spectral region are passed;

the third light sensor and the third color filter are configured to form a predetermined third color channel, such that only the light signals associated with the first blue spectral region are passed;

the fourth light sensor and the fourth color filter are configured to form a predetermined fourth color channel, such that only the light signals associated with the second blue spectral region are passed.

22. The data processing apparatus according to any one of claims 17-21, wherein the first blue spectral region and the second blue spectral region are different blue spectral regions; a standard blue spectral region has an overlapped region with the first blue spectral region and another overlapped region with the second blue spectral region.

23. The data processing apparatus according to claim 22, wherein the first blue spectral region is disposed in a long wavelength region of the standard blue spectral region, and the second blue spectral region is disposed in a low wavelength region of the standard blue spectral region.

24. The data processing apparatus according to claim 23, wherein the first blue spectral region comprises a 440 nm to 480 nm band and the second blue spectral region comprises a 400 nm to 440 nm band.

25. A computer-readable storage medium, storing a computer program; wherein the computer program is configured to be loaded and executed by a processor to perform the data processing method according to any one of claims 9-16.

FIG. 1

FIG. 2

FIG. 3

FIG. 4

FIG. 5

FIG. 6

FIG. 7

obtaining a spectrum of a first reflected light that enters the image sensor after an ambient light irradiates an object by reflection 〜801

determining a first red component perceived by the first pixel unit according to a sum of a product of the spectrum of the first reflected light and a spectral transmittance of the first pixel unit at a corresponding wavelength 〜802

determining a first green component perceived by the second pixel unit according to a sum of a product of the spectrum of the first reflected light and a spectral transmittance of the second pixel unit at a corresponding wavelength 〜803

determining a first blue component perceived by the third pixel unit according to a sum of a product of the spectrum of the first reflected light and a spectral transmittance of the third pixel unit at a corresponding wavelength 〜804

determining a second blue component perceived by the fourth pixel unit according to a sum of a product of the spectrum of the first reflected light and a spectral transmittance of the fourth pixel unit at a corresponding wavelength 〜805

determining a red-green-blue response of the human eye according to a color conversion relationship and the first red component, the first green component, the first blue component, and the second blue component 〜806

FIG. 8

900

spectrum obtaining module 〜910

component determination module 〜920

response determination module 〜930

FIG. 9

## INTERNATIONAL SEARCH REPORT

| International application No. |
| --- |
| **PCT/CN2021/111189** |

**A.    CLASSIFICATION OF SUBJECT MATTER**

H04N 5/369(2011.01)i;  G06T 5/00(2006.01)i

According to International Patent Classification (IPC) or to both national classification and IPC

**B.    FIELDS SEARCHED**

Minimum documentation searched (classification system followed by classification symbols)

H04N, G06T

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 传感, 成像, CCD, CMOS, 像素, 红, 绿, 蓝, 第二, 两, 俩, 不同, 透过率, 透射率, 波长, 乘, 积, 转换, 矩阵, sensor, imaging, pixel, second+, different, two, red, green, blue, transmissivity, wavelength, matrix

**C.    DOCUMENTS CONSIDERED TO BE RELEVANT**

| Category* | Citation of document, with indication, where appropriate, of the relevant passages | Relevant to claim No. |
| --- | --- | --- |
| X | CN 103004218 A (MATSUSHITA ELECTRIC INDUSTRY CO., LTD.) 27 March 2013 (2013-03-27)<br>    description paragraphs 107-114, 172-183, figures 5, 7, 10-11 | 1-8 |
| X | US 2009295962 A1 (OMNIVISION) 03 December 2009 (2009-12-03)<br>    description paragraph 32, figure 2 | 1-4, 8 |
| X | WO 2020112726 A1 (INTUITIVE SURGICAL OPERATIONS, INC.) 04 June 2020 (2020-06-04)<br>    description, paragraphs 39-44, figures 2-3B | 1-4, 8 |
| PX | CN 111918005 A (GUANGDONG OPPO MOBILE TELECOMMUNICATIONS CORP., LTD.) 10 November 2020 (2020-11-10)<br>    claims 1-12, description paragraphs 96-107 | 1-25 |
| A | JP 2006013567 A (MITSUBISHI ELECTRIC CORP.) 12 January 2006 (2006-01-12)<br>    entire document | 1-25 |
| A | CN 1862339 A (AU OPTRONICS CORPORATION) 15 November 2006 (2006-11-15)<br>    entire document | 1-25 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 October 2021** | **10 November 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

<div align="center">

**INTERNATIONAL SEARCH REPORT**
Information on patent family members

</div>

International application No.

**PCT/CN2021/111189**

| Patent document cited in search report | | | Publication date (day/month/year) | Patent family member(s) | | | Publication date (day/month/year) |
|---|---|---|---|---|---|---|---|
| CN | 103004218 | A | 27 March 2013 | WO | 2012157209 | A1 | 22 November 2012 |
| | | | | US | 2013120541 | A1 | 16 May 2013 |
| | | | | US | 9179127 | B2 | 03 November 2015 |
| | | | | JP | WO2012157209 | A1 | 31 July 2014 |
| | | | | JP | 5995084 | B2 | 21 September 2016 |
| | | | | CN | 103004218 | B | 24 February 2016 |
| US | 2009295962 | A1 | 03 December 2009 | US | 7990445 | B2 | 02 August 2011 |
| WO | 2020112726 | A1 | 04 June 2020 | CN | 113164054 | A | 23 July 2021 |
| | | | | EP | 3886681 | A1 | 06 October 2021 |
| CN | 111918005 | A | 10 November 2020 | | None | | |
| JP | 2006013567 | A | 12 January 2006 | JP | 3933651 | B2 | 20 June 2007 |
| CN | 1862339 | A | 15 November 2006 | CN | 100437287 | C | 26 November 2008 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010973121X